# FASCICULE DE BREVET EUROPEEN

(11) **EP 0 884 864 B1**
(45) Date de publication et mention de la délivrance du brevet: **17.11.2004**
(21) Numéro de dépôt: 98401357.3
(22) Date de dépôt: 08.06.1998
(51) Int. Cl.: H04B 7/26, H04Q 7/22

(54) **Procédé d'allocation de canaux de transmission à une station mobile**
Verfahren zur Zuweisung von Übertragskanälen an eine Mobilstation
Method for assigning transmission channels to a mobile station

(30) Priorité: 10.06.1997 FR 9707197
(43) Date de publication de la demande: 16.12.1998
(73) Titulaire: ALCATEL, 75008 Paris (FR)
(72) Inventeur: Dupuy, Pierre, 75017 Paris (FR)
(74) Mandataire: El Manouni, Josiane

(56) Documents cités:
- EP-A- 0 681 406
- EP-A- 0 687 078
- EP-A- 0 720 310
- WO-A-95/31878
- DE-A- 19 543 845
- US-A- 5 535 207

## Description

La présente invention concerne d'une manière générale les techniques d'allocation de ressources de transmission dans les réseaux de télécommunications.

On sait qu'il existe essentiellement deux modes de transmission dans les réseaux de télécommunications :
- un mode de transmission appelé mode circuit, dans lequel les ressources de transmission sont allouées pour la durée d'une communication, qu'il y ait ou non transmission d'informations,
- un mode de transmission appelé mode paquet, dans lequel l'allocation de ressources de transmission est susceptible d'être modifiée en cours de communication, ce qui permet un meilleur partage des ressources de transmission entre plusieurs communications, en fonction des besoins instantanés de chacune d'elles.

Le mode circuit est plus particulièrement adapté aux communications vocales, tandis que le mode paquet est plus particulièrement adapté à la transmission de données, notamment dans le cas de débits de transmission irréguliers dans le temps, et de plus dissymétriques dans les deux sens de transmission, ce qui est notamment le cas lorsque le réseau est utilisé pour réaliser une transmission de données entre un terminal de télécommunications et un serveur informatique.

La présente invention concerne plus particulièrement l'utilisation du mode paquet dans les réseaux de télécommunications mobiles, une telle utilisation étant aussi connue sous le nom de GPRS ("General Packet Radio Service"), pour les réseaux de télécommunications mobiles de type GSM ("Global System for Mobile communications").

On rappelle que le réseau GSM est un réseau du type à accès multiple par répartition temporelle (ou TDMA, pour

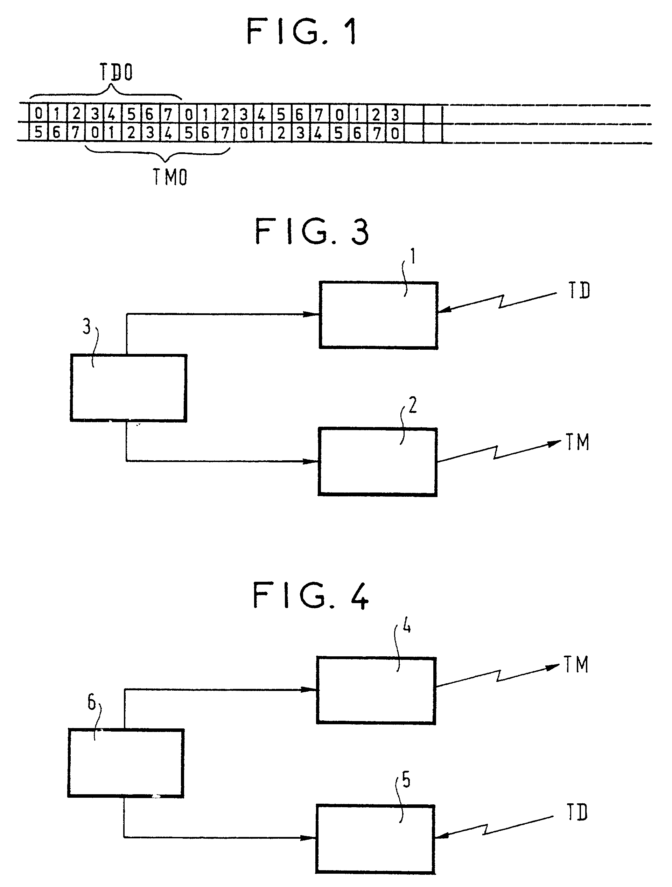

"Time Division Multiple Access") dans lequel les ressources de transmission sont constituées, comme rappelé sur la figure 1, par des canaux temporels ou intervalles de temps (ou IT, repérés ici simplement par leur numéro, de 0 à 7) de trames descendantes (telles que TDO) utilisées pour la transmission dans le sens réseau vers station mobile, et de trames montantes (telles que TMO) utilisées pour la transmission dans le sens station mobile vers réseau, ces trames descendantes et montantes étant portées par des fréquences porteuses distinctes, respectivement descendante et montante.

Dans un réseau GSM, un même intervalle de temps est alloué pour une communication en mode circuit, dans les trames descendantes et montantes, les trames montantes étant en outre décalées temporellement par rapport aux trames descendantes, comme rappelé sur la figure 1, d'une durée permettant à une station mobile opérant dans un mode dit semi-duplex (ou "half-duplex"), c'est-à-dire équipée de moyens permettant de réaliser alternativement, et non pas simultanément, une réception sur la fréquence descendante et une émission sur la fréquence montante, d'effectuer la commutation de fréquence nécessaire.

Dans le cas du service GPRS, les intervalles de temps alloués à une station mobile pour la durée d'une communication sont susceptibles de changer d'une trame à l'autre. Des exemples de procédés d'allocation sont décrits dans les documents EP 681406 et EP 687078.

En outre, il est connu d'informer la station mobile des intervalles de temps qui lui sont alloués dans le sens montant, pour une trame donnée, en lui adressant, dans le sens descendant, pendant la trame précédente, et sur chacun de ces mêmes intervalles de temps, une autorisation d'émission, cette autorisation d'émission étant en pratique contenue dans un champ de bits particulier, appelé USF (pour: "Uplink Status Flag").

Avec un tel mécanisme d'autorisation, on voit que pour augmenter le nombre d'intervalles de temps consécutifs alloués en émission, il est nécessaire d'augmenter de façon correspondante le nombre d'intervalles de temps consécutifs alloués en réception, mais qu'une limite à une telle augmentation est imposée par le fonctionnement en mode semi-duplex, qui oblige à prévoir entre les intervalles de temps alloués en réception et ceux alloués en émission un certain temps de garde pour pouvoir effectuer la commutation de fréquence nécessaire.

Par exemple, pour allouer à une station mobile, en émission, les quatre intervalles de temps consécutifs IT0 à IT3, il serait nécessaire d'allouer à cette station mobile, en réception, les quatre intervalles de temps consécutifs IT0 à IT3, ce qui en pratique, pour des stations mobiles de type standard (c'est-à-dire équipées d'un seul synthétiseur de fréquence, c'est-à-dire encore nécessitant un temps de garde égal à deux intervalles de temps) est impossible, comme on peut le vérifier à l'aide de la figure 1.

Ainsi, dans le cas du réseau GSM et de stations mobiles de type standard opérant en mode semi-duplex, le nombre maximum d'intervalles de temps consécutifs alloués par trame en réception est égal à quatre, et le nombre maximum d'intervalles de temps consécutifs alloués par trame en émission est égal à trois (quatre intervalles de temps consécutifs alloués en réception correspondant à deux intervalles de temps consécutifs alloués en émission, et trois intervalles de temps consécutifs alloués en réception correspondant à trois intervalles de temps consécutifs alloués en émission).

Pour éviter cet inconvénient, et par conséquent pour accroître la capacité d'émission dans chaque trame, il a été proposé de donner les autorisations d'émission, non plus par trame (ou autrement dit "à la volée"), mais par groupe de trames consécutives, ces autorisations étant alors données dans des messages de signalisation particuliers dits messages de "Fixed Assignment". Avec une telle méthode, il devient alors possible d'allouer des trames entières en émission (ou en réception).

Une telle solution a cependant à son tour des inconvénients.

Notamment, le schéma d'allocation retenu pour une période d'allocation correspondant à un groupe de trames consécutives ne peut plus être modifié pendant toute cette période; or les besoins en allocation peuvent changer, notamment pour faire face à des demandes plus urgentes intervenant au cours de cette période, auquel cas le schéma d'allocation initial peut se révéler inadapté; en d'autres termes l'allongement de la période d'allocation entraîne un manque de réactivité du réseau.

En outre, si la station mobile reste trop longtemps en émission, elle ne peut plus, dans un réseau cellulaire tel que notamment le réseau GSM, se mettre régulièrement à l'écoute des cellules voisines, afin d'effectuer des mesures, en vue d'une part de déterminer la meilleure de ces cellules vers laquelle la communication pourra éventuellement être transférée dans le cadre d'une procédure de transfert (ou "handover"), et d'autre part en vue de pouvoir localiser cette station mobile, et donc de pouvoir contrôler sa puissance d'émission afin de réduire le niveau global d'interférence dans le réseau.

Bien sûr, il peut être prévu de réserver certains groupes de trames consécutives pour effectuer de telles mesures sur les cellules voisines, mais cela aboutit à une concentration dans le temps de ces mesures, qui nuit à une bonne représentativité des résultats obtenus (l'idéal, pour une bonne représentativité, étant de répartir ces mesures sur toutes les trames).

De plus, pour permettre au réseau de déterminer le nombre de trames à réserver pour de telles mesures, ceci oblige la station mobile à transmettre au réseau des messages de signalisation spécifiques indiquant notamment le nombre de cellules voisines, la vitesse à laquelle la station mobile peut effectuer ces mesures, ...etc, ceci au détriment de données utiles à transmettre.

La présente invention a essentiellement pour but de proposer un système d'allocation qui soit un bon compromis entre les deux systèmes ainsi rappelés, c'est-à-dire qui permette essentiellement de conserver les avantages d'une allocation par trame, tout en autorisant une certaine augmentation de la capacité d'émission, par trame.

La présente invention a ainsi pour objet un procédé d'allocation de canaux de transmission de données à une station mobile, notamment en mode semi-duplex, dans un réseau de télécommunications mobiles du type à accès multiple par multiplexage de canaux de transmission, et en mode paquet dans lequel les canaux de transmission alloués à une station mobile, respectivement dans un sens dit descendant, du réseau vers la station mobile, et dans un sens dit montant, de la station mobile vers le réseau, sont susceptibles de changer à chaque période dite période d'allocation, une autorisation d'émission reçue sur un canal de transmission dans le sens descendant pour une période d'allocation donnée valant allocation de ce canal de transmission dans le sens montant pour la période d'allocation suivante,

ce procédé étant essentiellement caractérisé en ce qu'une autorisation d'émission reçue sur un canal de transmission dans le sens descendant pour une période d'allocation donnée vaut allocation, dans le sens montant, pour la période d'allocation suivante, non seulement de ce canal de transmission, dit aussi canal d'autorisation, mais aussi de canaux de transmission consécutifs, identifiables à partir dudit canal d'autorisation, suivant une loi prédéfinie. Un procédé semblable est connu parmi les documents EP 681406 et EP 687078.

D'autres objets et caractéristiques de la présente invention apparaîtront à la lecture de la description suivante d'un exemple de réalisation, faite en relation avec les dessins ci-annexés dans lesquels:
- la figure 1 est un diagramme rappelant le principe des trames descendantes et montantes dans un réseau tel que notamment le réseau GSM,
- la figure 2 est un diagramme destiné à illustrer divers exemples d'allocation suivant l'invention, à titre d'exemple pour l'application au service GPRS prévu dans un réseau GSM,
- la figure 3 est un schéma de principe d'une station mobile, pour la mise en oeuvre du procédé d'allocation suivant l'invention,
- la figure 4 est un schéma de principe d'une station fixe (ou station de base) d'un réseau de télécommunications mobiles, pour la mise en oeuvre du procédé d'allocation suivant l'invention.

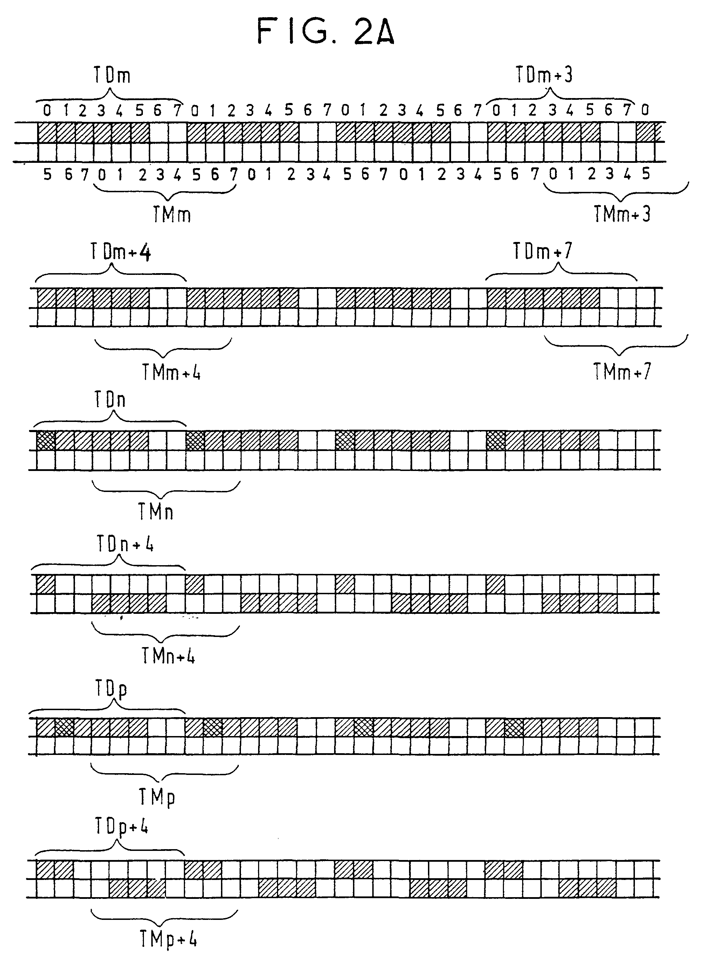

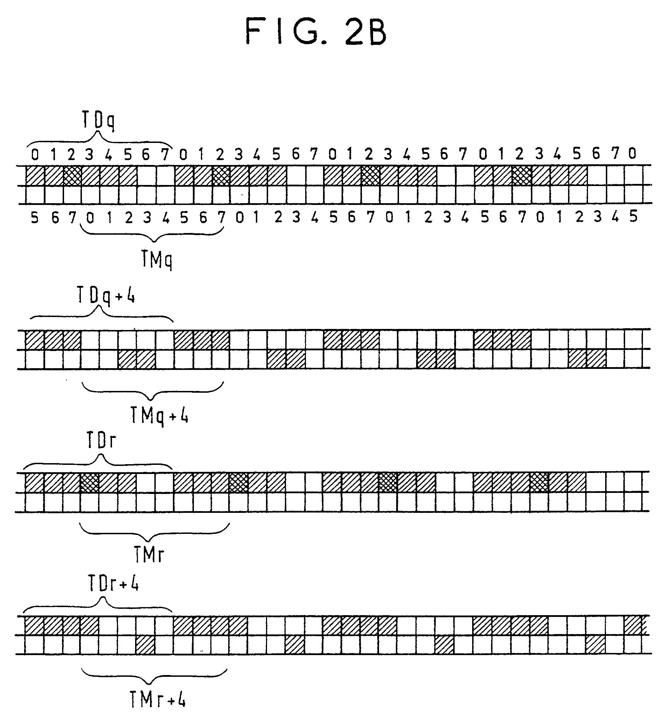

Dans l'exemple de la figure 2 on a illustré schématiquement un ensemble de trames descendantes successives TDm, ...TDm+7, ..., TDn, ...TDn+7, ..., TDp, ...TDp+7, ..., TDq, ...TDq+7, ..., TDr, ...TDr+7, ..., et un ensemble de trames montantes successives correspondantes TMm, ...TMm+7, ..., TMn, ...TMn+7, ..., TMp, ...TMp+7, ..., TMq, ...TMq+7, ..., TMr, ...TMr+7, ..., chacune de ces trames comportant, comme rappelé plus haut, un ensemble de huit intervalles de temps IT0 à IT7 (repérés simplement par leur numéro de 0 à 7), et les trames montantes étant, comme rappelé plus haut, décalées par rapport aux trames descendantes de trois intervalles de temps.

On a en outre indiqué par des hachures les intervalles de temps où le réseau transmet, dans les trames descendantes, vers la station mobile, ainsi que les intervalles de temps où la station mobile transmet, vers le réseau, dans les trames montantes, et par un quadrillage les intervalles de temps où le réseau transmet des autorisations d'émission à la station mobile.

Suivant un premier exemple, correspondant au cas des trames descendantes TDm à TDm+7 et des trames montantes TMm à TMm+7, le réseau transmet des données à la station mobile dans les intervalles de temps IT0 à IT5 des trames descendantes TDm à TDm+3, sans donner d'autorisation d'émission à la station mobile.

Dans ce cas la station mobile ne transmet pas dans les trames montantes suivantes TMm+4 à TMm+7, le réseau pouvant alors continuer à transmettre dans les trames TMm+4 à TMm+7 de la même manière que sur les trames TDm à TDm+3, en l'occurrence dans les intervalles de temps IT0 à IT5.

Suivant un deuxième exemple, correspondant au cas des trames descendantes TDn à TDn+7 et des trames montantes TMn à TMn+7, le réseau transmet des données à la station mobile dans les intervalles de temps IT0 à IT5 des trames descendantes TDn à TDn+3, en donnant en outre, à titre d'exemple dans les intervalles de temps IT0 de ces trames, une autorisation d'émission à la station mobile.

Dans ce deuxième exemple, la station mobile transmet alors des données, non seulement dans l'intervalle de temps IT0, dit aussi intervalle de temps d'autorisation, de chacune des trames montantes suivantes TMn+4 à TMn+7, mais aussi dans des intervalles de temps consécutifs, identifiables à partir de cet intervalle de temps d'autorisation, suivant une loi prédéfinie.

A titre d'exemple d'une telle loi prédéfinie, il est défini une fenêtre temporelle, qui est formée d'intervalles de temps adjacents, et dans laquelle est transmis l'intervalle de temps d'autorisation, lesdits intervalles de temps consécutifs étant constitués par ceux des intervalles de temps de cette fenêtre temporelle qui sont compris entre l'intervalle de temps d'autorisation et le dernier intervalle de temps de cette fenêtre (ce dernier inclus), et qui sont considérés comme allouables à la station mobile pour une communication donnée.

Dans l'exemple considéré ici d'un réseau GSM, et d'une station mobile de type standard opérant en mode semi-duplex, une telle fenêtre temporelle ne doit pas en l'occurrence comporter plus de quatre intervalles de temps adjacents, pour tenir compte des deux intervalles de temps nécessaires à une station mobile de type standard pour effectuer la commutation de fréquence nécessaire.

A titre d'exemple, correspondant aux divers exemples illustrés sur la figure 2, cette fenêtre temporelle est formée des intervalles de temps IT0 à IT3, et il est en outre considéré, dans ces divers exemples, que tous les intervalles de temps de cette fenêtre peuvent être alloués à la station mobile considérée, notamment parce qu'aucun d'eux n'est déjà alloué à une autre station mobile.

Suivant le deuxième exemple, les intervalles de temps d'autorisation étant constitués par les intervalles de temps IT0, la station mobile transmet alors des données dans les intervalles de temps IT0 à IT3 des trames montantes suivantes, en l'occurrence les trames TMn+4 à TMn+7, le réseau ne transmettant plus alors que dans les intervalles de temps IT0 des trames descendantes correspondantes TDn+4 à TDn+7, pour laisser à la station mobile le temps d'effectuer la commutation de fréquence nécessaire.

Suivant un troisième exemple, correspondant au cas des trames descendantes TDp à TDp+7 et des trames montantes TMp à TMp+7, le réseau transmet des données à la station mobile dans les intervalles de temps IT0 à IT5 des trames descendantes TDp à TDp+3, en donnant en outre, dans les intervalles de temps IT1 de ces trames, une autorisation d'émission à la station mobile.

Dans ce troisième exemple, la station mobile transmet alors des données dans les intervalles de temps IT1 à IT3 des trames montantes suivantes, en l'occurrence les trames TMp+4 à TMp+7, le réseau n'émettant plus alors que dans les intervalles de temps IT0 et IT1 des trames descendantes correspondantes TDp+4 à TDp+7, pour laisser à la station mobile le temps d'effectuer la commutation de fréquence nécessaire.

Suivant un quatrième exemple, correspondant au cas des trames descendantes TDq à TDq+7 et des trames montantes TMq à Tmq+7, le réseau transmet des données à la station mobile dans les intervalles de temps IT0 à IT5 des trames descendantes TDq à TDq+3, en donnant en outre, dans les intervalles de temps IT2 de ces trames, une autorisation d'émission à la station mobile.

Dans ce quatrième exemple, la station mobile transmet alors des données dans les intervalles de temps IT2 et IT3 des trames montantes suivantes, en l'occurrence les trames TMq+4 à TMq+7, le réseau n'émettant plus alors que dans les intervalles de temps IT0 à IT2 des trames descendantes correspondantes TDq+4 à TDq+7, pour laisser à la station mobile le temps d'effectuer la commutation de fréquence nécessaire.

Suivant un cinquième exemple, correspondant au cas des trames descendantes TDr à TDr+7 et des trames montantes TMr à Tmr+7, le réseau transmet des données à la station mobile dans les intervalles de temps IT0 à IT5 des trames descendantes TDr à TDr+3, en donnant en outre, dans les intervalles de temps IT3 de ces trames, une autorisation d'émission à la station mobile.

Dans ce cinquième exemple, la station mobile transmet alors des données dans les intervalles de temps IT3 des trames montantes suivantes, en l'occurrence les trames TMr+4 à TMr+7, le réseau n'émettant plus alors que dans les intervalles de temps IT0 à IT3 des trames descendantes correspondantes TDr+4 à TDr+7, pour laisser à la station mobile le temps d'effectuer la commutation de fréquence nécessaire.

Ce dernier exemple, où un seul intervalle de temps est ainsi alloué, en émission, à la station mobile, correspond notamment au cas où le réseau demande à la station mobile un acquittement, suite à une transmission précedente de données du réseau vers la station mobile.

Les exemples considérés auparavant, où plus d'un intervalle de temps est alloué, en émission, à la station mobile, correspondent au contraire à des cas où la station mobile a besoin de transmettre des données au réseau, ce besoin étant, suivant des techniques connues, communiqué au réseau, prélablement à la mise en oeuvre de la procédure d'autorisation.

Le choix du nombre d'intervalles de temps alloué en émission à la station mobile, et donc ici le choix de l'emplacement de l'intervalle de temps d'autorisation, est opéré par le réseau, notamment en fonction des besoins de transmission du réseau vers la station mobile.

En d'autres termes, ledit canal d'autorisation est déplacé, en fonction de la quantité de données à transmettre par la station mobile, de manière à réduire, ou augmenter, le nombre desdits canaux consécutifs, suivant que cette quantité de données décroît, ou croît.

En outre, le nombre de canaux de transmission alloués en réception est réduit lorsque le nombre desdits canaux consécutifs est augmenté, de manière à conserver un temps de garde suffisant entre réception et émission, autorisant le fonctionnement suivant ledit mode semi-duplex.

Dans l'exemple illustré il a été considéré que tous les intervalles de temps de la fenêtre temporelle, formée dans cet exemple des intervalles de temps IT0 à IT3, peuvent être alloués pour une communication donnée à la station mobile considérée. Tel n'est pas nécessairement le cas; par exemple, si l'intervalle de temps IT2 de la fenêtre temporelle formée des intervalles de temps IT0 à IT3 n'était pas disponible:
- dans le cas où l'autorisation est donnée sur l'intervalle de temps IT0, la station mobile émettrait sur les intervalles de temps IT0, IT1 et IT3,
- dans le cas où l'autorisation est donnée sur l'intervalle de temps IT1, la station mobile émettrait sur les intervalles de temps IT1 et IT3,
- dans le cas où l'autorisation est donnée sur l'intervalle de temps IT3, la station mobile émettrait, comme précédemment, sur l'intervalle de temps IT3.

Dans l'exemple considéré ici d'un réseau GSM et de stations mobiles de type standard opérant dans le mode semi-duplex, il est considéré qu'un intervalle de temps non alloué en émission ou en réception est nécessaire pour permettre à la station mobile d'effectuer des mesures sur les cellules voisines, et que, dans le cas où une commutation de fréquence est en outre à effectuer, en plus de telles mesures, deux tels intervalles de temps consécutifs non alloués en émission ou en réception sont nécessaires.

Ainsi, dans les divers exemples illustrés sur la figure 2, les intervalles de temps IT6 et IT7 des trames descendantes TDm à TDm+7, TDn à TDn+3, TDp à TDp+3, TDq à TDq+3, et TDr à TDr+3, étant non alloués en émission ou en réception, peuvent être utilisés pour faire de telles mesures , et, si nécessaire, pour effectuer un changement de fréquence en réception pour le cas de transmission selon la technique du saut de fréquence (ou "frequency hopping").

De même, dans l'exemple illustré, les intervalles de temps IT1 et IT2 des trames descendantes TDn+4 à TDn+7, les intervalles de temps IT2 et IT3 des trames descendantes TDp+4 à TDp+7, les intervalles de temps IT3 et IT4 des trames descendantes TDq+4 à TDq+7, et les intervalles de temps IT4 et IT5 des trames descendantes TDr+4 à TDr+7, peuvent être utilisés pour effectuer de telles mesures et pour effectuer une commutation de fréquence.

On voit ainsi que dans chacun des exemples illustrés sur la figure 2, une mesure par trame peut être effectuée, ce qui correspond au cas idéal mentionné plus haut.

Le seul cas où une mesure ne pourrait pas être effectuée à l'intérieur d'une trame correspondrait au cas, non illustré spécifiquement, d'une trame descendante dont les intervalles de temps IT0 à IT7 seraient tous alloués en réception.

Pour compenser ce manque de mesures, et, corrélativement, pour maintenir vis-à-vis du réseau un certain nombre de mesures par unité de temps, une solution peut être trouvée, consistant à déplacer, dans les trames montantes, les intervalles de temps utilisés pour les acquittements par la station mobile, vers l'intervalle de temps IT0 de ces trames, de manière à réduire corrélativement le nombre d'intervalles de temps alloués en réception sur les trames descendantes associées. Par exemple, dans le cinquième exemple,en déplaçant l'intervalle de temps d'acquittement, de l'intervalle de temps IT3 des trames montantes TMr+4 à TMr+7, vers l'intervalle de temps IT2, ou IT1, ou IT0, de ces mêmes trames, ceci libère, suivant le cas, l'intervalle de temps IT3, ou les intervalles de temps IT2 et IT3, ou les intervalles de temps IT1, IT2 et IT3, des trames descendantes associées TDr+4 à TDr+7, pour effectuer de telles mesures.

Dans ce cas, l'autorisation d'émission transmise dans les trames descendantes associées TDr à TDr+3 serait transmise, selon le cas, dans l'intervalle de temps IT2, IT1, ou IT0 de ces trames descendantes. Bien que ceci entraîne alors une allocation de plus d'un intervalle de temps en émission (selon le cas, les intervalles de temps IT2 et IT3, ou IT1, IT2 et IT3, ou IT0, IT1, IT2, et IT3, des trames montantes considérées TMr+4 à TMr+7), un seul de ces intervalles de temps serait utilisé pour l'acquittement, ce qui libèrerait en outre des intervalles de temps supplémentaires pour effectuer des mesures.

Le schéma de la figure 3 est destiné à illustrer le type de moyens utilisés dans une station mobile pour utiliser le procédé d'allocation suivant l'invention.

Une telle station mobile comporte:
- des moyens 1 de réception de canaux de transmission sur des trames descendantes, et de détection d'autorisations d'émission contenues dans ces canaux reçus,
- des moyens 2 d'émission de canaux de transmission sur des trames montantes,
- des moyens 3 de commande de ces moyens d'émission et de réception, de manière à permettre un fonctionnement selon le procédé ainsi décrit.

Le schéma de la figure 4 est destiné à illustrer le type de moyens utilisés dans une une station fixe (appelée aussi station de base) d'un réseau de télécommunications mobiles, pour utiliser le procédé d'allocation suivant l'invention.

Une telle station fixe comporte:
- des moyens 4 d'émission de données dans des canaux de transmission sur lesdites trames descendantes, ainsi que d'autorisation d'émission sur certains de ces canaux émis,
- des moyens 5 de réception de canaux de transmission sur lesdites trames montantes,
- des moyens 6 de commande de ces moyens d'émission et de réception, de manière à permettre un fonctionnement selon le procédé ainsi décrit.

Les moyens d'émission (2 ou 4) ou de réception (1 ou 3) peuvent être des moyens classiques qui ne nécessitent donc pas d'être redécrits ici.

La réalisation particulière des moyens de commande (3 ou 6) de manière à faire fonctionner l'ensemble selon le procédé ainsi décrit, ne posant pas de problème particulier à l'homme du métier, ne sera pas non plus décrite de manière plus détaillée.

On comprendra par ailleurs que les divers cas illustrés sur la figure 2 ne constituent que des exemples destinés à illustrer le principe d'allocation suivant l'invention, et qu'une multitude d'autres cas peuvent se présenter en pratique.

On comprendra en outre que bien que le procédé d'allocation suivant l'invention ait été plus particulièrement décrit pour le cas de l'utilisation du service GPRS dans un réseau GSM, l'invention n'est pas limitée à une telle application, et n'est en outre pas limitée à un réseau TDMA, c'est-à-dire à accès multiple par multiplexage de canaux temporels, mais s'applique de manière générale à tout réseau à accès multiple par mutiplexage de canaux de transmission, que ce soit un réseau TDMA ("Time Division Multiple Access"), FDMA ("Frequency Division Multiple Access") ou encore CDMA ("Code Division Multiple Access").

## Revendications

1. Procédé d'allocation de canaux de transmission de données à une station mobile, notamment en mode semi-duplex, dans un réseau de télécommunications mobiles du type à accès multiple par multiplexage de canaux de transmission, et en mode paquet dans lequel les canaux de transmission alloués à une station mobile, respectivement dans un sens dit descendant, du réseau vers la station mobile, et dans un sens dit montant, de la station mobile vers le réseau, sont susceptibles de changer à chaque période dite période d'allocation, une autorisation d'émission reçue sur un canal de transmission dans le sens descendant pour une période d'allocation donnée valant allocation de ce canal de transmission dans le sens montant pour la période d'allocation suivante,
**caractérisé en ce qu'**une autorisation d'émission reçue sur un canal de transmission dans le sens descendant pour une période d'allocation donnée vaut allocation, dans le sens montant, pour la période d'allocation suivante, non seulement de ce canal de transmission, dit aussi canal d'autorisation, mais aussi de canaux de transmission consécutifs, identifiables à partir dudit canal d'autorisation, selon une loi prédéfinie.

2. Procédé selon la revendication 1, **caractérisé en ce que** ladite loi prédéfinie est telle qu'il est défini une fenêtre qui est formée de canaux de transmission adjacents et dans laquelle est transmis le canal d'autorisation, lesdits canaux de transmission consécutifs étant constitués par ceux des canaux de transmission de cette fenêtre qui sont compris entre le canal d'autorisation et le dernier intervalle de temps de cette fenêtre ce dernier inclus, et qui sont allouables à la station mobile pour une communication donnée.

3. Procédé selon l'une des revendications 1 et 2, **caractérisé en ce que** ledit canal d'autorisation est déplacé, en fonction de la quantité de données à transmettre par la station mobile, de manière à réduire, ou augmenter, le nombre desdits canaux consécutifs, suivant que cette quantité de données décroît, ou croît.

4. Procédé selon l'une des revendications 1 à 3, **caractérisé en ce que** le nombre de canaux de transmission alloués en réception est réduit lorsque le nombre desdits canaux consécutifs est augmenté, de manière à conserver un temps de garde suffisant entre réception et émission, autorisant le fonctionnement suivant ledit mode semi-duplex.

5. Procédé selon l'une des revendications 1 à 4, **caractérisé en ce que** le canal d'autorisation destiné à autoriser l'émission d'un acquittement par la station mobile, dans un canal de transmission unique, est déplacé de manière à augmenter le nombre desdits canaux consécutifs, et par là-même réduire le nombre de canaux de transmission alloués en réception, afin de libérer des canaux de transmission pour l'écoute du réseau par la station mobile.

6. Station mobile, pour la mise en oeuvre d'un procédé d'allocation suivant l'une des revendications 1 à 5, **caractérisée en ce qu'**elle comporte:
- des moyens (1) de réception de canaux de transmission sur des trames descendantes, et de détection d'autorisations d'émission dans ces canaux reçus,
- des moyens (2) d'émission de canaux de transmission sur des trames montantes,
- des moyens (3) de commande de ces moyens d'émission et de réception, de manière à permettre un fonctionnement selon ledit procédé.

7. Station fixe pour réseau de télécommunications, pour la mise en oeuvre du procédé suivant l'une des revendications 1 à 5, **caractérisée en ce qu'**elle comporte:
- des moyens (4) d'émission de données dans des canaux de transmission sur des trames descendantes, ainsi que d'autorisations d'émission sur certains de ces canaux émis,
- des moyens (5) de réception de canaux de transmission sur des trames montantes,
- des moyens (6) de commande de ces moyens d'émission et de réception, de manière à permettre un fonctionnement selon ledit procédé.

## Patentansprüche

1. Verfahren zur Zuweisung von Datenübertragungskanälen an eine Mobilstation, insbesondere im Halbduplex-Verfahren, in einem Mobilfunk-Telekommunikationsnetz mit Mehrfachzugriff durch ein Multiplexverfahren der Übertragungskanäle und mit Paketvermittlung, in welchem die einer Mobilstation zugewiesen Übertragungskanäle, und zwar in einer als absteigend bezeichneten Richtung vom Netz zur Mobilstation beziehungsweise in einer als aufsteigend bezeichneten Richtung von der Mobilstation zum Netz, in jedem als Zuweisungszeitraum bezeichneten Zeitraum eine Sendegenehmigung ändern können, die auf einem Übertragungskanal in absteigender Richtung für einen gegebenen Zuweisungszeitraum empfangen wurde, wobei dies als Zuweisung dieses Übertragungskanals in aufsteigender Richtung für den folgenden Zuweisungszeitraum gilt;
**dadurch gekennzeichnet, dass** eine auf einem Übertragungskanal in absteigender Richtung empfangene Sendegenehmigung für einen gegebenen Zuweisungszeitraum als Zuweisung in aufsteigender Richtung für den folgenden Zuweisungszeitraum gilt, und zwar nicht nur für diesen Übertragungskanal, der auch als Genehmigungskanal bezeichnet wird, sondern auch für die darauf folgenden Übertragungskanäle, die ausgehend von diesem Genehmigungskanal nach einer zuvor definierten Regel identifizierbar sind.

2. Verfahren nach Anspruch 1, **dadurch gekennzeichnet, dass** dieses zuvor definierte Regel der Art ist, dass ein Fenster definiert wird, das von benachbarten Übertragungskanälen gebildet wird und in dem der Genehmigungskanal übertragen wird, wobei diese aufeinander folgenden Übertragungskanäle aus jenen der Übertragungskanäle dieses Fensters bestehen, die zwischen dem Übertragungskanal und dem letzten Zeitintervall dieses Fensters einschließlich dieses letzteren bestehen und die der Mobilstation für eine gegebene Verbindung zugewiesen werden können.

3. Verfahren nach einem der Ansprüche 1 und 2, **dadurch gekennzeichnet, dass** dieser Genehmigungskanal in Abhängigkeit von der Menge der von der Mobilstation zu übertragenden Daten verschoben wird, und zwar in der Weise, dass die Anzahl der aufeinander folgenden Kanäle je nachdem, ob die Datenmenge abnimmt oder zunimmt, verringert oder erhöht wird.

4. Verfahren nach einem der Ansprüche 1 bis 3, **dadurch gekennzeichnet, dass** die Anzahl der für einen Sendevorgang zugewiesenen Übertragungskanäle verringert wird, wenn die Anzahl der aufeinander folgenden Kanäle erhöht wird, und zwar in der Weise, dass eine ausreichende Wartezeit zwischen dem Senden und Empfangen gewahrt bleibt, welche eine Betriebsweise gemäß dem genannten Halbduplex-Verfahren zulässt.

5. Verfahren nach einem der Ansprüche 1 bis 4, **dadurch gekennzeichnet, dass** der Genehmigungskanal, der dazu dient, das Senden einer Bestätigung durch die Mobilstation in einem einzigen Übertragungskanal zu genehmigen, in der Weise verschoben wird, dass die Anzahl dieser aufeinander folgenden Kanäle erhöht wird und dadurch die Anzahl der für den Empfangsvorgang zugewiesenen Kanäle verringert wird, um Übertragungskanäle für das Abhören des Netzes durch die Mobilstation zu ermöglichen.

6. Mobilstation für die Umsetzung eines Zuweisungsverfahrens nach einem der Ansprüche 1 bis 5, **dadurch gekennzeichnet, dass** sie aufweist:
- Vorrichtungen (1) zum Empfangen von Übertragungskanälen in absteigenden Blöcken und zum Erkennen von Sendegenehmigungen in diesen empfangenen Kanälen;
- Vorrichtungen (2) zum Senden von Übertragungskanälen in aufsteigenden Blöcken;
- Vorrichtungen (3) zur Steuerung dieser Sende- und Empfangsvorrichtungen in der Weise, dass ein Betrieb nach dem beschriebenen Verfahren möglich ist.

7. Ortsfeste Station für ein Telekommunikationsnetz zur Umsetzung eines Zuweisungsverfahrens nach einem der Ansprüche 1 bis 5, **dadurch gekennzeichnet, dass** sie aufweist:
- Vorrichtungen (4) zum Senden von Daten in Übertragungskanälen in absteigenden Blöcken sowie von Sendegenehmigungen auf einigen dieser gesendeten Kanäle;
- Vorrichtungen (5) zum Empfangen von Übertragungskanälen in aufsteigenden Blöcken;
- Vorrichtungen (6) zur Steuerung dieser Sende- und Empfangsvorrichtungen in der Weise, dass ein Betrieb nach dem beschriebenen Verfahren möglich ist.

## Claims

1. A method of allocating data transmission channels to a mobile station, in particular in half-duplex mode, in a mobile telecommunications network of the type using packet mode and having multiple access by multiplexing transmission channels, in which method the transmission channels allocated to a mobile station, respectively in a "down" direction from the network to the mobile station, and in an "up" direction from the mobile station to the network, can change at each "allocation period", a transmission authorization received over a transmission channel in the down direction for a given allocation period indicating that said transmission channel is allocated in the up direction for the following allocation period;
said method being **characterized in that** a transmission authorization received over a transmission channel in the down direction for a given allocation period indicates that not only said transmission channel, also referred to as the authorization channel, but also consecutive transmission channels identifiable from said authorization channel using a predefined relationship, are allocated in the up direction for the following allocation period.

2. A method according to claim 1, **characterized in that** said predefined relationship is such that a window is defined which is formed of adjacent transmission channels and in which the authorization channel is transmitted, said consecutive transmission channels being constituted by those of the transmission channels of the window which lie between the authorization channel and the last time slot in the window including said last time slot, and which can be allocated to the mobile station for a given call.

3. A method according to claim 1 or 2, **characterized in that** said authorization channel is displaced, as a function of the quantity of data to be transmitted by the mobile station, so as to reduce, or to increase, the number of said consecutive channels, depending on whether said quantity of data deceases, or increases.

4. A method according to any one of claims 1 to 3, **characterized in that** the number of transmission channels allocated for reception is reduced when the number of said consecutive channels is increased, so as to leave a guard time between reception and transmission that is long enough to make half-duplex mode operation possible.

5. A method according to any one of claims 1 to 4, **characterized in that** the authorization channel serving to authorize transmission of an acknowledgement by the mobile station, in a single transmission channel, is displaced so as to increase the number of said consecutive channels, thereby reducing the number of transmission channels allocated for reception, so as to release transmission channels to enable the mobile station to listen to the network.

6. A mobile station, for implementing a method of allocation according to any one of claims 1 to 5, said mobile station being **characterized in that** it includes:
receive means (1) for receiving transmission channels over down frames, and for detecting transmission authorizations in the received channels;
transmit means (2) for transmitting transmission channels over up frames; and
control means (3) for controlling the transmit means and the receive means, so as to enable said method to operate.

7. A fixed station for a telecommunications network, for implementing the method according to any one of claims 1 to 5, said fixed station being **characterized in that** it includes:
transmit means (4) for transmitting data in transmission channels over down frames, as well as transmission authorizations over some of the transmitted channels;
receive means (5) for receiving transmission channels over up frames; and
control means (6) for controlling said transmit means and said receive means, so as to enable said method to operate.
